# EUROPÄISCHE PATENTSCHRIFT

(11) **EP 3 711 481 B1**
(45) Veröffentlichungstag und Bekanntmachung des Hinweises auf die Patenterteilung: **29.12.2021**
(21) Anmeldenummer: 20164400.2
(22) Anmeldetag: 20.03.2020
(51) Int. Cl.: A01M 7/00

(54) **VERFAHREN UND VORRICHTUNG ZUM APPLIZIEREN VON FLÜSSIGKEITEN AUF PFLANZEN**
METHOD AND DEVICE FOR APPLYING LIQUIDS TO PLANTS
PROCÉDÉ ET DISPOSITIF POUR L'APPLICATION DES LIQUIDES SUR DES PLANTES

(30) Priorität: 22.03.2019 DE 102019107361
(43) Veröffentlichungstag der Anmeldung: 23.09.2020
(73) Patentinhaber: Inovel Systeme AG, 88046 Friedrichshafen (DE)
(72) Erfinder: Axel, Dittus, 88074 Meckenbeuren (DE); Johannes, Schäfer, 88255 Neu Briach (DE)
(74) Vertreter: Daub, Thomas

(56) Entgegenhaltungen:
- CN-B- 102 613 160
- DE-U1-202008 012 021
- FR-A1- 2 640 849
- FR-A1- 2 969 902

## Beschreibung

### Technisches Gebiet

Die Erfindung betrifft ein Verfahren zum Betreiben einer Pflanzen-Applikationsvorrichtung nach dem Oberbegriff des Anspruchs 1 und eine Pflanzen-Applikationsvorrichtung nach dem Oberbegriff des Anspruchs 11.

### Stand der Technik

Derartige Pflanzenapplikations-Vorrichtungen und deren Verfahren zum Betreiben sind bereits in vielfältiger Form und Ausgestaltung bekannt und gebräuchlich.

In der CN 102 613 160 B wird eine Applikationsvorrichtung nach dem Oberbegriff der nebengeordneten Ansprüche offenbart. Gleiches gilt für die FR 2 640 849 A1, die DE 20 2008 012 021 U1 und die FR 2 969 902 A1.

So wird beispielsweise in der DE 10 2017 210 560 A1 ein Verfahren zum Ausbringen eines Spritzmittels offenbart. In dem beschriebenen Verfahren wird das Spritzmittel derart unterteilt, dass eine vorgesehene Menge an Spritzmittel auf eine zu behandelnde landwirtschaftliche Fläche aufgebracht wird und eine sogenannte Restmenge auf eine restliche landwirtschaftliche Fläche aufgebracht werden soll. Allerdings wird nicht weiter beschrieben, was zu erfolgen hat, wenn keine restliche landwirtschaftliche Fläche mehr übrig ist. Vielmehr wird versucht umfangreich über Berechnungen die Restmenge in einem Tank zu ermitteln, um diese Restmenge dann rechtzeitig zu applizieren.

Weiter wird auf die DE 10 2006 012 504 A1 hingewiesen. Dort ist ein Verfahren zur optimierten Ausbringung von Pflanzenschutzmitteln offenbart. Dazu wird eine Aufsattelspritze oder Anhängespritze mit einem Fahrzeug genutzt. Die Spritzeinrichtung fährt dabei durch pflanzliche Reihenkulturen, wie Obst-, Weinbau- oder Hopfenplantagen, wobei während des Ausbringens von Pflanzenschutzmittel Orts-bzw. Positionsdaten bestimmt und ermittelt werden bezogen auf die Orts-und Positionsdaten, die Windrichtung, Windstärke sowie die Menge und die Richtung, in welche das Pflanzenschutzmittel gegenüber dem Fahrzeug ausgebracht wird. Diese Daten werden permanent bestimmt, geregelt und abgespeichert.

### Aufgabe der Erfindung

Die Aufgabe der vorliegenden Erfindung ist es, die Nachteile aus dem Stand der Technik zu überwinden. Insbesondere soll ein Verfahren zum Betreiben einer Pflanzen - Applikationsvorrichtung und eine Pflanzen - Applikationsvorrichtung bereitgestellt werden, wobei ein Tank am Ende des Nutzungsvorgangs der Pflanzen-Applikationsvorrichtung komplett entleert sein soll und dabei beim Ausbringen eines Pflanzenschutzmittels keine oder keine nennenswerten Reste mehr übrigbleiben sollen.

### Lösung der Aufgabe

Zur Lösung der Aufgabe führen die Merkmale nach dem Anspruch 1.

Vorteilhafte Ausgestaltungen sind in den Unteransprüchen beschrieben.

Das erfindungsgemäße Verfahren zum Betreiben einer Pflanzen-Applikationsvorrichtung ist zunächst dadurch spezifiziert, dass die Applikationsvorrichtung einen Rahmen aufweist. Der Rahmen kann beispielsweise derart gestaltet sein, dass teilweise Seitenwandungen vorhanden sind, sodass es sich um ein Gehäuse handelt. Letztendlich ist dies von der Art der Nutzung und den gesetzten Anforderungen abhängig. Der Rahmen umfasst eine Druckquelle, einen Tank und einen Rechner. Dabei können die einzelnen Teile wie die Druckquelle, der Tank oder der Rechner ganz oder teilweise im Rahmen angeordnet sein oder außerhalb des Rahmens.

Weiter sind ein Ausbringbalken und ein weiterer Ausbringbalken vorhanden, aus welchem das Pflanzenschutzmittel mittels jeweiliger Ausbringdüsen ausgeworfen wird.

Dazu werden die Pflanzreihen von einer ersten Seite mit dem Pflanzenschutzmittel appliziert. Was an Pflanzenschutzmittel nicht auf die Pflanzreihen applizierbar ist wird auf der zweiten Seite der jeweiligen Pflanzreihe über eine Auffangwand in einen Sammelbehälter geführt. Die Auffangwand wird im Rahmen der weiteren Ausführung der Erfindung als ein Einsaugbalken und an dem Einsaugbalken angebrachten Einsaugdüsen bezeichnet. Die Einsaugdüsen dienen dem Auffangen eines Restpflanzenschutzmittels durch Einsaugen. Dadurch soll verhindert werden, des nicht applizierbares Restpflanzenschutzmittel nicht unkontrolliert in die Umwelt gelangen soll. In einem bevorzugten Ausführungsbeispiel wird das Restpflanzenschutzmittel von der Auffangwand aufgefangen. Dabei bedarf es keiner Einsaugdüsen, da der Luftstrom der Ausbringdüsen das Restpflanzenschutzmittel gegen die Auffangwand wirft und dort entsprechend aufgefangen wird. Dabei kann einer der Sammelbehälter für das Restpflanzenschutzmittel an der jeweiligen Auffangwand vorgesehen sein. Es ist aber auch denkbar, dass ein einziger Sammelbehälter für das Restpflanzenschutzmittel in und/oder am Rahmen angeordnet ist.

Der Rechner erfasst über einen Ausbringsensor das Pflanzenschutzmittel. Weiter erfasst der Rechner über einen Resterfassungssensor das Restpflanzenschutzmittel, welches nicht applizierbar ist. Die Resterfassungssensoren übermitteln die erfasste Menge des Restpflanzenschutzmittels an den Rechner.

Da es sich bei der erfassten Restpflanzenschutzmittel um geringe Mengen handelt, können diese geringen Mengen an Restpflanzenschutzmittel entweder nach Ablauf der ersten Zeiteinheit oder nach Ablauf von n-Zeiteinheiten automatisch oder manuell im Feld verklappt werden oder zurück in einen Tank der Pflanzen-Applikationsvorrichtung oder einen anderen Behälter getrennt von der Pflanzen-Applikationsvorrichtung geführt werden.

Daraufhin regelt der Rechner die auf die Pflanzen zu applizierende Menge von Pflanzenschutzmittel derart, dass die Restpflanzschutzmittelmenge gegen Null geht. Dazu kann der Rechner die Druckquelle und/oder eine Medienausbringung aus dem Tank zu der Ausbringdüse anpassen, sodass eine Restpflanzenschutzmittelmenge gegen Null verläuft. Auch kann der Rechner den Luftvolumenstrom oder den hydraulischen Strom beeinflussen, welcher aus den Ausbringdüsen austritt. Dabei wird das Pflanzenschutzmittel durch Druck oder einen Luftstrom ausgebracht. Der Rechner führt die Medienausbringung derart nach, dass idealerweise durch die Einsaugdüsen keinerlei Restpflanzenschutzmittelmenge mehr eingesaugt werden kann.

Der Ausbringsensor ermittelt die ausgebrachte Pflanzenschutzmittelmenge über eine erste Zeiteinheit und übermittelt die Information an den Rechner. In einem weiteren Schritt erfasst der Resterfassungssensor die Restpflanzenschutzmittelmenge über die erste Zeiteinheit. Der Rechner erhält dadurch die Information darüber, welche Pflanzenschutzmittelmenge über die erste Zeiteinheit auf die Pflanzreihe appliziert wurde und wieviel Restpflanzenschutzmittelmenge nicht applizierbar war. Dadurch erhält der Rechner eine Delta-Menge.

In einer zweiten Zeiteinheit verringert der Rechner dann die in einer zweiten Zeiteinheit auszubringende Pflanzenschutzmittelmenge um die Delta-Menge der Restpflanzenschutzmittelmenge aus der ersten Zeiteinheit, sodass in der zweiten Zeiteinheit eine geringere zweite Delta-Menge erreicht wird. Sollte die Delta-Menge Null betragen wird die Pflanzenschutzmittelmenge für eine dritte Zeiteinheit wieder um einen bestimmten Faktor vergrößert, um die Gefahr auszuschließen, das zu wenige Pflanzenschutzmittel appliziert wird. Bei dem bestimmten Faktor kann es sich um eine festgelegte prozentuale Erhöhung handeln oder um die Pflanzenschutzmenge aus der ersten Zeiteinheit handeln. Ziel ist es, dass die Restpflanzenschutzmittelmenge gegen Null tendiert, aber nach Möglichkeit nicht Null beträgt. In diesem Zusammenhang kann auch eine Anpassung des Luftstromes derart erfolgen, sodass ein größerer Anteil des Pflanzenschutzmittels an der applizierten Pflanze hängen bleibt.

Während der Zeiteinheiten wird der Geo-Positionsverlauf der Pflanzen-Applikationsvorrichtung während der ersten Zeiteinheit, der zweiten Zeiteinheit, der dritten Zeiteinheit und weiterer Zeiteinheiten durch ein Geo-Lokalisationssystem ermittelt. Bei dem Geo-Lokalisationssystem kann es sich beispielsweise um ein GPS-System oder Geschwindigkeits- und/oder Lagesensoren handeln. Dabei wird die Summe zu jeder Position des Geo-Positionsverlaufs in einem Speichermedium abgespeichert. Auf diese Weise kann der Nutzer im Rechner zu jedem Geo - Positionsverlauf die tatsächlich benötigte Menge an Pflanzenschutzmittel abfragen. Neben der Summe werden auch Prozessdaten, wie Strukturinformationen des Pflanzenvolumens oder der Pflanzenfläche, allgemeine Maschinen- und Prozessdaten ermittelt. Zur Ermittlung der Strukturinformationen wird ein LiDAR- Sensor oder ein Radarsensor oder andere Sensoren eingesetzt.

Für jede Zeiteinheit wird der Geo-Positionsverlauf von einem ersten Startpunkt zu einem ersten Endpunkt ermittelt und die Summe der ausgebrachten Pflanzenschutzmittelmenge abzüglich der Restpflanzenschutzmittelmenge abgespeichert. Auf diese Weise erhält der Nutzer bei einem zweiten Ablauf des Geo-Positionsverlaufs die benötigte Menge des Pflanzenschutzmittels.

Die Summe wird in einem Speichermedium mit dem Geo-Positionsverlauf abgespeichert. Es ist auch denkbar die Wetterbedingungen mit zu erfassen. Als Speichermedium kommen Datenträger wie USB-Sticks, Festplatten oder dergleichen in Betracht. Es ist aber auch vorgesehen, dass die Informationen der verschiedenen Zeiteinheiten und die dazugehörigen Geo-Positionsverläufe in einer Cloud gespeichert werden.

Weiter kann eine Position der Pflanzen-Applikationsvorrichtung über einen Geschwindigkeitssensor und/oder Lagesensor erfasst werden. Dabei kann ein Abgleich mit Absolutkoordinaten durchgeführt werden, um eine zusätzliche Kontrolle zu haben.

Dadurch kann der Rechner spätestens beim zweiten Einsatz auf dem gleichen Feld die genaue Menge an benötigtem Pflanzenschutzmittel ermitteln und dem Nutzer über den Rechner zur Verfügung stellen, sodass der Nutzer die genau benötigte Menge an Pflanzenschutzmittel in den Tank füllt und anschliessend den Restinhalt des Tanks nicht verklappen muss, da der Tank vollständig entleert wäre.

Der Rechner soll außerdem laufend oder intervallisch einen Funktionstest für die einzelnen Ausbringdüsen durchführen. Dazu wird ein Düsendruck, ein Düsendurchfluss anhand einer Düsenkonstante der Ausbringdüse ermittelt. Die Düsenkonstante wird durch den Nutzer manuell durch eine Eingabemaske eingegeben oder bei hinterlegten Düsenkonstanten in der Eingabemaske entsprechend ausgewählt und bestimmt. Dabei wird das Pflanzenschutzmittel nach dem Stand der Technik über einen Mittelwert aller Düsen kontrolliert.

Durch das erfindungsgemäße Vorgehen ist eine Überwachung einzelner Düsen oder Gruppierungen von Düsen möglich.

Nach Auswahl bzw. Eingabe der Düsenkonstante durch den Nutzer werden bei den Daten einer jeder Ausbringdüse ein IST/SOLL-Abgleich durchgeführt. Die SOLL-Daten einer jeden Ausbringdüse sind bekannt und/oder auch in dem Rechner hinterlegt. Bisher wird bei einer Funktionsbeeinträchtigung der einen Düse, der Druck auf die anderen Ausbringdüsen erhöht, sodass die gleiche Menge an Pflanzenschutzmittel dann durch die anderen Ausbringdüsen gedrückt wird, was zu einem ungleichmäßigen Verteilungsbild führt und Teile der Pflanzenreihen unappliziert lässt. Bei Abweichung eines IST-Zustandes vom SOLL-Zustand wird eine Fehlermeldung erzeugt und an einen Signalabnehmer übermittelt. Bei dem Signalabnehmer kann es sich beispielsweise um ein Smartphone, eine Anzeige im Zugfahrzeug oder eine abgesetzte Nachricht in Form einer Email oder ein Signal handeln, damit der Nutzer die verstopfte Ausbringdüse frei machen und reinigen kann. Es ist aber auch denkbar, dass eine oder ein Teil der Düsen nicht vollständig verstopft, sondern verschmutzt ist, was eine teilweise Verstopfung der Düse zur Folge hat. In dem Zusammenhang könnte der Druck unverändert bleiben, aber ein Teil der Pflanzen würde nicht mit dem Pflanzenschutzmittel appliziert werden, was vermieden werden könnte, bei einer erfindungsgemäßen Kontrolle der Düsen.

Weiter ist eine Pflanzen-Applikationsvorrichtung vorhanden, wobei die Pflanzen-Applikationsvorrichtung einen Rahmen aufweist. Dabei umfasst der Rahmen eine Druckquelle, einen Tank und einen Rechner. Es kann auch derart ausgeführt sein, dass es sich bei dem Rahmen um ein Gehäuse handelt und die Druckquelle, der Tank und der Rechner ganz oder teilweise in oder ausserhalb des Gehäuses bzw. des Rahmens angeordnet sind.

An den Rahmen ist ein Ausbringbalken mit einer Ausbringdüse angebracht. In der Regel handelt es sich dabei um eine Vielzahl von Ausbringdüsen. Weiter ist Ausbringbalken über einen Querträger mit einem Einsaugbalken verbunden, wobei der Einsaugbalken eine Einsaugdüse umfasst. Auch hier kommt in der Regel eine Vielzahl von Einsaugdüsen zum Einsatz. Die Einsaugdüsen und die Ausbringdüsen sind dabei in etwa der gleichen Höhe angebracht. Dies ist aber nicht zwingend.

Der Ausbringbalken weist einen Ausbringsensor auf und der Einsaugbalken weist einen Resterfassungssensor auf. Der Ausbringsensor und der Resterfassungssensor sind mit dem Rechner informationsverbunden. Weiter ist der Rechner mit der Druckquelle und der Ausbringdüse wirkverbunden. Zusätzlich wird der Inhalt des Tanks ermittelt und ebenfalls an den Rechner übermittelt. Bei dem Resterfassungssensor handelt es sich um eine besonders wichtige Stellschraube für das erfindungsgemäße Verfahren.

Der Ausbringsensor ist in einem bevorzugten Ausführungsbeispiel ein Volumenstromsensor und der Resterfassungssensor ein Volumenstrommesser oder eine Schlauchpumpe. Dabei handelt es sich um kostengünstige und den extremen Umweltbedingungen wie Staub, Hitze etc. gut widerstandsfähige Sensoren. Allerdings können grundsätzlich auch andere Sensoren zum Einsatz kommen. In einem optionalen Ausführungsbeispiel handelt es sich bei dem Volumenstrommesser um einen magnetisch-induktiven Volumenstrommesser.

### Figurenbeschreibung

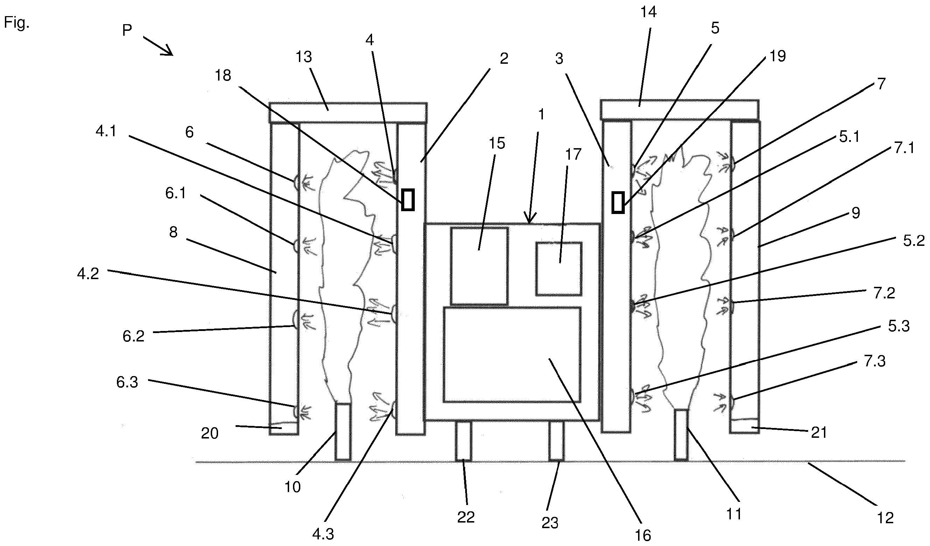

Weitere Vorteile, Merkmale und Einzelheiten der Erfindung ergeben sich aus der nachfolgenden Beschreibung eines bevorzugten Ausführungsbeispiels sowie anhand der Zeichnung; diese zeigt eine schematische Rückansicht einer erfindungsgemäßen Pflanzen-Applikationsvorrichtung 1.

### Ausführungsbeispiel

Die Pflanzen-Applikationsvorrichtung P weist einen Rahmen 1 auf, wobei der Rahmen 1 zwei Räder 22, 23 umfasst. Die Räder 22, 23 dienen der Fortbewegung des Rahmens 1 auf einem Untergrund 12. Bei der Pflanzen-Applikationsvorrichtung P kann es sich um eine Aufsattelspritze oder Anhängespritze mit einem Fahrzeug handeln. Im Rahmen der Figurenbeschreibung ist dies unwesentlich.

In dem Rahmen 1 ist eine Druckquelle 15, ein Tank 16 und ein Rechner 17 schematisch angedeutet. Die Druckquelle 15 ist dabei mit dem Tank 16 derart verbunden, dass über nicht näher gezeigte Leitungen ein Pflanzenschutzmittel aus dem Tank 16 einerseits des Rahmens 1 zu Ausbringdüsen 4, 4.1, 4.2, 4.3 des Ausbringbalkens 2 gepumpt. Durch die Ausbringdüse 4, 4.1, 4.2, 4.3 wird das Pflanzenschutzmittel in Richtung der ersten Seite der Pflanzreihe 10 ausgeworfen.

Der Ausbringbalken 2 ist über einen Querträger 13 mit einem Einsaugbalken 8 verbunden. Einsaugbalken 8 wiederum weist Einsaugdüsen 6, 6.1, 6.2, 6.3 auf. Dabei sind die Einsaugdüsen 6, 6.1, 6.2, 6.3 in etwa gleicher Höhe zu dem Untergrund 12 angebracht wie die Ausbringdüsen 4, 4.1, 4.2, 4.3..

Der Ausbringbalken 2, der Querträger 13 und der Einsaugbalken 8 bilden dabei ein U-Profil.

Der Ausbringbalken 2 wiederum weist einen Ausbringsensor 18 auf. Dabei kann der Ausbringsensor 18 derart ausgestaltet sein, dass sämtliches ausgebrachtes Pflanzenschutzmittel erfasst werden kann. Der Ausbringsensor 18 kann aber auch der Art ausgestaltet sein, dass er für jede einzelne der Ausbringdüsen 4, 4.1, 4.2, 4.3 das ausgebrachte Pflanzenschutzmittel ermittelt.

Der Einsaugbalken 8 weist einen Resterfassungssensor 20 auf. Der Resterfassungssensor 20 ist im Einsaugbalken 8 unten angeordnet. Unten bedeutet in diesem Zusammenhang der Teil des Einsaugbalkens sacht, welcher bei einem ordnungsgemäßen Gebrauch, wie er in der Figur gezeigt ist, nahe dem Untergrund 12 angeordnet ist.

Dadurch sammelt sich das Restpflanzenschutzmittel, welches durch die Einsaugdüsen 6, 6.1, 6.2, 6.3 von der zweiten Seite der Pflanzreihe 10 aufgenommen wird durch die Schwerkraft im unteren Bereich des Einsaugbalken 8, wo sich dann auch der Resterfassungssensor 20 befindet.

Der Ausbringbalken 2 weist also den Ausbringsensor 18 auf und der Einsaugbalken 8 weist den Resterfassungssensor 20 auf.

Der Rahmen 1 weist andererseits einen weiteren Ausbringbalken 3 auf. Der weitere Ausbringbalken 3 wiederum weist weitere Ausbringdüsen 5, 5.1, 5.2, 5.3 auf. Außerdem ist in dem weiteren Ausbringbalken 3 ein weiterer Ausbringsensor 19 vorgesehen.

Es ist aber auch denkbar, dass nicht jeder der Ausbringbalken 2, 3 einen eigenen Ausbringsensor 18, 19 aufweist, sondern ein einziger Ausbringsensor in oder am Rahmen 1 angeordnet ist und beide Ausbringbalken 18, 19 überwacht.

Der weitere Ausbringbalken 3 ist über einen weiteren Querträger 14 mit einem weiteren Einsaugbalken 9 derart verbunden, dass die drei Teile gemeinsam ein U-Profil ausbilden. Der Einsaugbalken 9 wiederum weist weitere Einsaugdüsen 7, 7.1, 7.2, 7.3 auf. Auch hier sind die weiteren Einsaugdüsen 7, 7.1, 7.2, 7.3 in etwa im gleichen Abstand zur dem Untergrund 12 angeordnet, wie die Ausbringdüsen 5, 5.1, 5.2, 5.3..

Die weiteren Ausbringdüse 5, 5.1, 5.2, 5.3 bringen das Pflanzenschutzmittel von einer ersten Seite der Pflanzreihe 11 auf die weitere Pflanzreihe 11 auf. Von der zweiten Seite der weiteren Pflanzreihe 11 saugen die Einsaugdüse 7,7.1,7.2,7.3 das Restpflanzenschutzmittel in den Einsaugbalken 9 ein. Der Einsaugbalken 9 weist im unteren Bereich, welcher bei ordnungsgemäßem Gebrauch nahe dem Untergrund 12 angeordnet ist, einen weiteren Resterfassungssensor 21 auf.

Der Ausbringsensor 18 und der Resterfassungssensor 20 sind mit dem Rechner 17 informationsverbunden. Informationsverbunden bedeutet im Rahmen der Erfindung, dass erfasste Werte des Ausbringsensors 18 bzw. des weiteren Ausbringsensors 19 genauso wie die erfassten Mengen des Resterfassungssensors 20 und des weiteren Resterfassungssensors 21 an den Rechner 17 übermittelt werden. Weiter ist der Rechner 17 mit dem Tank 16, der Druckquelle 15 und der Ausbringdüsen 4, 4.1, 4.2, 4.3 und der weiteren Ausbringdüsen 5, 5.1, 5.2, 5.3 wirkverbunden. Wirkverbindung bedeutet im Rahmen der Erfindung, dass der Rechner 17 den Tank 16, der Druckquelle 15 und der Ausbringdüsen 4, 4.1, 4.2, 4.3 und der weiteren Ausbringdüsen 5, 5.1, 5.2, 5.3 beeinflussen kann.

Außerdem weist der Tank 16 einen Füllstandsensor auf, welcher ebenfalls mit dem Rechner 17 informationsverbunden ist.

**Bezugszeichenliste**

| | |
|---|---|
| 1 | Rahmen |
| 2 | Ausbringbalken |
| 3 | Weiterer Ausbringbalken |
| 4 | Ausbringdüse |
| 5 | Weitere Ausbringdüse |
| 6 | Einsaugdüse |
| 7 | Weitere Einsaugdüse |
| 8 | Einsaugbalken |
| 9 | Weiterer Einsaugbalken |
| 10 | Pflanzreihe |
| 11 | Weitere Pflanzreihe |
| 12 | Untergrund |
| 13 | Querträger |
| 14 | Weiterer Querträger |
| 15 | Druckquelle |
| 16 | Tank |
| 17 | Rechner |
| 18 | Ausbringsensor |
| 19 | Weiterer Ausbringsensor |
| 20 | Resterfassungssensor |
| 21 | Weiterer Resterfassunpssensor |
| 22 | Rad |
| 23 | Rad |
| | |
| | |
| | |
| P | Pflanzen-Applikationsvorrichtung |

## Patentansprüche

1. Verfahren zum Betreiben einer Pflanzen-Applikationsvorrichtung (P) mit einem Rahmen (1), wobei der Rahmen (1) eine Druckquelle (15), einen Tank (16) und einen Rechner (17) umfasst und über eine Ausbringdüse (4, 4.1, 4.2, 4.3, 5, 5.1, 5.2, 5.3) eines Ausbringbalkens (2, 3) ein Pflanzenschutzmittel von einer ersten Seite auf eine Pflanzreihe (10, 11) ausbringt und über eine Auffangwand ein Restpflanzenschutzmittel aufnimmt und in einen Sammelbehälter geführt, wobei der Ausbringbalken einen Ausbringsensor (18, 19) aufweist,
**gekennzeichnet durch** folgende Schritte:
- der Rechner (17) erfasst über den Ausbringsensor (18, 19) das Pflanzenschutzmittel;
- der Rechner (17) erfasst über einen Resterfassungssensor (20, 21) eine Menge des Restpflanzenschutzmittels und/oder durch zyklisches Entleeren des Sammelbehälters die Menge des Restpflanzenschutzmittels, wobei ein Volumen des Sammelbehälters im Rechner (17) hinterlegt wird;
- der Rechner (17) regelt die ausgebrachte Pflanzenschutzmittelmenge derart, dass eine Restpflanzenschutzmittelmenge gegen Null verläuft.

2. Verfahren nach Anspruch 1, **dadurch gekennzeichnet, dass** als Auffangwand eine Einsaugdüse (6, 6.1, 6.2, 6.3, 7, 7.1, 7.2, 7.3) eines Einsaugbalkens (8, 9) das Restpflanzenschutzmittel auffängt.

3. Verfahren nach Anspruch 1 oder 2, **dadurch gekennzeichnet, dass** der Resterfassungssensor (20, 21) das ausgebrachte Pflanzenschutzmittel und eine Menge des Restpflanzenschutzmittels über eine erste Zeiteinheit erfasst und an den Rechner (17) übermittelt.

4. Verfahren nach einem der Ansprüche 1 bis 3, **dadurch gekennzeichnet, dass** der Rechner (17) von einer in einer zweiten Zeiteinheit auszubringenden Pflanzenschutzmittelmenge um die Restpflanzenschutzmittelmenge verringert.

5. Verfahren nach einem der vorigen Ansprüche, **dadurch gekennzeichnet, dass** ein Geo-Positionsverlauf der Ausbringvorrichtung (P) während der ersten Zeiteinheit ermittelt wird und dazu die Summe der ausgebrachten Pflanzenschutzmittelmenge abzüglich der Restpflanzenschutzmittelmenge abgespeichert wird und anschließend der Geo-Positionsverlauf der Ausbringvorrichtung (P) während der weiteren Zeiteinheit ermittelt wird und dazu die Summe der ausgebrachten Pflanzenschutzmittelmenge abzüglich der Restpflanzenschutzmittelmenge abgespeichert wird.

6. Verfahren nach Anspruch 5, **dadurch gekennzeichnet, dass** die Summen zu jeder Position der ersten und weiteren Zeiteinheiten des Geo-Positionsverlaufs in einem Speichermedium abgespeichert werden.

7. Verfahren nach einem der vorigen Ansprüche, **dadurch gekennzeichnet, dass** der Rechner (17) nach Eingabe und/oder Auswahl einer Düsenkonstante ein Düsendruck und ein Düsendurchfluss der Ausbringdüse (4, 4.1, 4.2, 4.3, 5, 5.1, 5.2, 5.3) ermittelt und einen IST/SOLL-Abgleich durchführt.

8. Verfahren nach Anspruch 7, **dadurch gekennzeichnet, dass** bei Abweichung eines IST-Zustandes vom SOLL-Zustand eine Fehlermeldung erzeugt und an einen Signalabnehmer übermittelt wird.

9. Verfahren nach einem der vorigen Ansprüche, **dadurch gekennzeichnet, dass** eine Position der Pflanzen-Applikationsvorrichtung (P) über einen Geschwindigkeitssensor und/oder Lagesensor erfasst wird und mit Absolutkoordinaten abgeglichen wird.

10. Verfahren nach einem der vorigen Ansprüche 5 bis 9, **dadurch gekennzeichnet, dass** eine Tankbefüllung des Tanks (16) auf die Summe abgestimmt wird.

11. Pflanzen-Applikationsvorrichtung (P) mit einem Rahmen (1), wobei der Rahmen (1) eine Druckquelle (15), einen Tank (16) und einen Rechner (17) umfasst, wobei ein Ausbringbalken (2, 3) eine Ausbringdüse (4, 4.1, 4.2, 4.3, 5, 5.1, 5.2, 5.3) umfasst und der Ausbringbalken (2, 3) über einen Querträger (13, 14) mit einem Einsaugbalken (8, 9) verbunden ist, wobei der Einsaugbalken (8, 9) eine Einsaugdüse (6, 6.1, 6.2, 6.3) umfasst und der Ausbringbalken (2) einen Ausbringsensor (18, 19) aufweist, **dadurch gekennzeichnet, dass** der Einsaugbalken (8, 9) einen Resterfassungssensor (20, 21) aufweist.

12. Pflanzen-Applikationsvorrichtung (1) nach Anspruch 11, **dadurch gekennzeichnet, dass** der Ausbringsensor (18, 19) und der Resterfassungssensor (20, 21) mit dem Rechner (17) informationsverbunden sind und der Rechner (17) mit dem Tank (16), der Druckquelle (15) und der Ausbringdüse (4, 4.1, 4.2, 4.3, 5, 5.1, 5.2, 5.3) wirkverbunden ist.

13. Pflanzen-Applikationsvorrichtung (1) nach einem der Ansprüche 11 oder 12, **dadurch gekennzeichnet, dass** der Ausbringsensor (18, 19) ein Volumenstromsensor ist und der Resterfassungssensor (20, 21) ein Volumenstrommesser oder eine Schlauchpumpe ist.

## Claims

1. A method for operating a plant application device (P) with a frame (1), wherein the frame (1) comprises a pressure source (15), a tank (16) and a computer (17) and applies a plant protection agent from a first side onto a row of plants (10, 11) via an application nozzle (4, 4. 1, 4.2, 4.3, 5, 5.1, 5.2, 5.3) of an application bar (2, 3) and collects residual crop protection agent via a collecting wall and guides it into a collecting container, wherein the application bar (2) has an application sensor (18, 19)
**characterized by** the following steps:
- the computer (17) detects the crop protection agent by means of the application sensor (18, 19);
- the computer (17) detects an amount of residual crop protection agent by means of a residue detection sensor (20, 21) and/or the amount of residual crop protection agent by cyclically emptying the collection container, wherein a volume of the collection container is stored in the computer (17);
- the computer (17) regulates the amount of crop protection agent applied in such a way that a residual amount of crop protection agent tends towards zero.

2. Method according to claim 1, **characterized in that** a suction nozzle (6, 6.1, 6.2, 6.3, 7, 7.1, 7.2, 7.3) of a suction bar (8, 9) collects the residual crop protection agent as a collecting wall.

3. Method according to claim 1 or 2, **characterized in that** the residue detection sensor (20, 21) detects the applied crop protection agent and a quantity of the residual crop protection agent over a first time unit and transmits it to the computer (17).

4. The method according to any of claims 1 to 3, **characterized in that** the computer (17) reduces from a quantity of crop protection agent to be applied in a second time unit by the amount of residual crop protection agent.

5. Method according to one of the preceding claims, **characterized in that** a geographical position course of the application device (P) is determined during the first time unit and, to this end, the sum of the amount of plant protection agent applied minus the amount of residual plant protection agent is stored, and subsequently the geographical position course of the application device (P) during the further time unit is determined and, for this purpose, the sum of the quantity of plant protection agent applied minus the quantity of residual plant protection agent is stored.

6. The method according to claim 5, **characterized in that** the totals for each position of the first and further time units of the geographical position course are stored in a storage medium.

7. Method according to any of the preceding claims, **characterized in that** the computer (17) determines a nozzle pressure and a nozzle flow rate of the application nozzle (4, 4.1, 4.2, 4.3, 5, 5.1, 5.2, 5.3) after inputting and/or selecting a nozzle constant, and performs an ACTUAL/TARGET comparison.

8. The method of claim 7, **characterized in that** in the event of a deviation of an ACTUAL state from the TARGET state, an error message is generated and transmitted to a signal receiver.

9. The method according to any of the preceding claims, **characterized in that** a position of the plant application device (P) is detected via a speed sensor and/or a position sensor and is compared with absolute coordinates.

10. Method according to any of the preceding claims 5 to 9, **characterized in that** a tank filling of the tank (16) is adjusted to the sum.

11. Plant application device (P) comprising a frame (1), wherein the frame (1) comprises a pressure source (15), a tank (16) and a computer (17), wherein an application bar (2, 3) comprises an application nozzle (4, 4.1, 4.2, 4.3, 5, 5.1, 5.2, 5. 3) and the application bar (2, 3) is connected to a suction bar (8, 9) via a cross member (13, 14), the suction bar (8, 9) comprising a suction nozzle (6, 6.1, 6.2, 6.3) and the application bar (2) having an application sensor (18, 19) **characterized in that** the suction bar (8, 9) has a residue detection sensor (20, 21).

12. Plant application device (1) according to claim 11, **characterized in that** the application sensor (18, 19) and the residue detection sensor (20, 21) are information-connected to the computer (17) and the computer (17) is operatively connected to the tank (16), the pressure source (15) and the application nozzle (4, 4.1, 4.2, 4.3, 5, 5.1, 5.2, 5.3).

13. Plant application device (1) according to one of claims 11 or 12, **characterized in that** the application sensor (18, 19) is a volume flow sensor and the residue detection sensor (20, 21) is a volume flow meter or a peristaltic pump.

## Revendications

1. Procédé destiné au fonctionnement d'un dispositif d'application sur des plantes (P) comportant un châssis (1), le châssis (1) comprenant une source de pression (15), un réservoir (16) et un ordinateur (17) et épandant un produit phytosanitaire d'un premier côté sur une rangée de plantes (10, 11) par l'intermédiaire d'une buse d'épandage (4, 4.1, 4.2, 4.3, 5, 5.1, 5.2, 5.3) d'une barre d'épandage (2, 3) et ramassant un produit phytosanitaire résiduel par l'intermédiaire d'une paroi de récupération et le guidant dans un récipient de collecte, la barre d'épandage présentant un capteur d'épandage (18, 19),
**caractérisé par** les étapes suivantes :
- l'ordinateur (17) détecte le produit phytosanitaire par l'intermédiaire du capteur d'épandage (18, 19) ;
- l'ordinateur (17) détecte une quantité de produit phytosanitaire résiduel par l'intermédiaire d'un capteur de détection de résidus (20, 21) et/ou la quantité de produit phytosanitaire résiduel en vidant de manière cyclique le récipient de collecte, un volume du récipient de collecte étant consigné dans l'ordinateur (17) ;
- l'ordinateur (17) régule la quantité de produit phytosanitaire épandu, de telle sorte qu'une quantité de produit phytosanitaire résiduel approche zéro.

2. Procédé selon la revendication 1, **caractérisé en ce qu'**une buse d'aspiration (6, 6.1, 6.2, 6.3, 7, 7.1, 7.2, 7.3) d'une barre d'aspiration (8, 9) récupère le produit phytosanitaire résiduel en tant que paroi de récupération.

3. Procédé selon la revendication 1 ou 2, **caractérisé en ce que** le capteur de détection de résidus (20, 21) détecte le produit phytosanitaire épandu et une quantité de produit phytosanitaire résiduel par l'intermédiaire d'une première unité de temps et les transmet à l'ordinateur (17).

4. Procédé selon l'une des revendications 1 à 3, **caractérisé en ce que** l'ordinateur (17) réduit la quantité de produit phytosanitaire à épandre dans une seconde unité de temps de la quantité de produit phytosanitaire résiduel.

5. Procédé selon l'une des revendications précédentes, **caractérisé en ce qu'**une courbe de position géographique du dispositif d'épandage (P) est déterminée pendant la première unité de temps et, à cet effet, le total de la quantité de produit phytosanitaire épandu moins la quantité de produit phytosanitaire résiduel est stocké, puis la courbe de position géographique du dispositif d'épandage (P) pendant l'autre unité de temps est déterminée et, à cet effet, le total de la quantité de produit phytosanitaire épandu moins la quantité de produit phytosanitaire résiduel est stocké.

6. Procédé selon la revendication 5, **caractérisé en ce que** les totaux pour chaque position de la première et de l'autre unités de temps de la courbe de position géographique sont stockés dans un support de stockage.

7. Procédé selon l'une des revendications précédentes, **caractérisé en ce que** l'ordinateur (17) détermine une pression de buse et un débit de buse de la buse d'épandage (4, 4.1, 4.2, 4.3, 5, 5.1, 5.2, 5.3) après saisie et/ou sélection d'une constante de buse, et effectue une comparaison réelle/cible.

8. Procédé selon la revendication 7, **caractérisé en ce que** lorsqu'un état réel s'écarte de l'état cible, un message d'erreur est généré et transmis à un récepteur de signaux.

9. Procédé selon l'une des revendications précédentes, **caractérisé en ce qu'**une position du dispositif d'application sur des plantes (P) est détectée par l'intermédiaire d'un capteur de vitesse et/ou d'un capteur d'emplacement et est comparée à des coordonnées absolues.

10. Procédé selon l'une des revendications 5 à 9 précédentes, **caractérisé en ce qu'**un remplissage de réservoir du réservoir (16) est adapté au total.

11. Dispositif d'application sur des plantes (P) comportant un châssis (1), le châssis (1) comprenant une source de pression (15), un réservoir (16) et un ordinateur (17), une barre d'épandage (2, 3) comprenant une buse d'épandage (4, 4.1, 4.2, 4.3, 5, 5.1, 5.2, 5.3) et la barre d'épandage (2, 3) étant reliée à une barre d'aspiration (8, 9) par l'intermédiaire d'une entretoise transversale (13, 14), la barre d'aspiration (8, 9) comprenant une buse d'aspiration (6, 6.1, 6.2, 6.3) et la barre d'épandage (2) présentant un capteur d'épandage (18, 19),
**caractérisé en ce que** la barre d'aspiration (8, 9) présente un capteur de détection de résidus (20, 21).

12. Dispositif d'application sur des plantes (1) selon la revendication 11, **caractérisé en ce que** le capteur d'épandage (18, 19) et le capteur de détection de résidus (20, 21) sont connectés de manière télématique à l'ordinateur (17) et l'ordinateur (17) est connecté de manière fonctionnelle au réservoir (16), à la source de pression (15) et à la buse d'épandage (4, 4.1, 4.2, 4.3, 5, 5.1, 5.2, 5.3).

13. Dispositif d'application sur des plantes (1) selon l'une des revendications 11 ou 12, **caractérisé en ce que** le capteur d'épandage (18, 19) est un capteur de débit volumétrique et le capteur de détection de résidus (20, 21) est un débitmètre volumétrique ou une pompe tubulaire.
